# FASCICULE DE BREVET EUROPEEN

(11) **EP 4 532 240 B1**
(45) Date de publication et mention de la délivrance du brevet: **12.08.2026**
(21) Numéro de dépôt: 23730407.6
(22) Date de dépôt: 31.05.2023
(51) Int. Cl.: B60K 15/03

(54) **ELÉMENT DE RENFORT INTERNE POUR RÉSERVOIR EN MATIÈRE PLASTIQUE POUR VÉHICULE AUTOMOBILE**
INNENVERSTÄRKUNGSELEMENT FÜR EINEN BEHÄLTER AUS KUNSTSTOFF FÜR EIN KRAFTFAHRZEUG
INTERNAL REINFORCING ELEMENT FOR A TANK MADE OF PLASTIC FOR A MOTOR VEHICLE

(30) Priorité: 01.06.2022 BE 202205423
(43) Date de publication de la demande: 09.04.2025
(73) Titulaire: OPmobility C-Power Belgium Research, 1200 Woluwe-Saint-Lambert (BE)
(72) Inventeur: OSZWALD, Pierre, 1200 BRUXELLES (BE); PERET, Thomas, 1200 BRUXELLES (BE); MADOUX, Dominique, 1200 BRUXELLES (BE)
(74) Mandataire: LLR
(86) Numéro de dépôt international: PCT/EP2023/064490
(87) Numéro de publication internationale: WO 2023/232841

(56) Documents cités:
- EP-A1- 3 790 755
- EP-A1- 3 790 755
- EP-A2- 3 878 676
- EP-A2- 3 878 676
- US-A1- 2018 154 769
- US-A1- 2018 154 769

## Description

L'invention concerne un élément de renfort interne pour réservoir en matière plastique pour véhicule automobile. Elle concerne également un réservoir en matière plastique pour véhicule automobile comprenant un élément de renfort interne.

Traditionnellement, les réservoirs à carburant des véhicules automobiles sont conçus pour conserver une quantité de carburant à une pression presque identique à la pression atmosphérique. Avec l'apparition de véhicules hybrides appelés également HEV (Hybrid Electric Vehicle, MHEV (Mild-Hybrid Electric Vehicle) ou PHEV (Plug-in Hybrid Electric Véhicle), en d'autres termes des véhicules automobiles comprenant un moteur thermique et un ou des moteurs électriques, qui peuvent potentiellement fonctionner plusieurs mois sans utiliser le moteur thermique, il est préférable de conserver la pression dans le réservoir pour réduire le passage des vapeurs d'essence à travers un filtre à charbon actif, appelé également canister. Ceci est effectué en isolant le canister du réservoir à l'aide d'une vanne telle qu'une Fuel Tank Isolation Valve (FTIV).

De tels réservoirs à carburant en matière plastique subissent donc des variations dimensionnelles au cours de leur vie. Tout d'abord dès leur sortie de moule du fait de leur refroidissement qui s'accompagne d'un retrait de la matière, lesdits réservoirs en matière plastique étant obtenus par extrusion-soufflage d'une paraison, mais également pendant leur utilisation, en raison notamment de surpressions ou de dépressions de leur contenu, soit du fait de leur dilatation thermique en cours de vie, soit du fait de la variation de température occasionnée par le cycle diurne, soit encore du fait de leur vieillissement.

Habituellement, les réservoirs à carburant en matière plastique pour véhicule automobile, plus particulièrement les réservoirs à carburant en matière plastique pour véhicule automobile hybride, comprennent un élément de renfort interne sous la forme d'un pilier solidarisant deux surfaces internes opposées du réservoir. Un tel pilier doit résister à différents tests tels que par exemple un vieillissement longue durée ou bien un « handling drop » d'une hauteur de 1 mètre sans dégradation des propriétés du réservoir à carburant. Ainsi, le document EP 3878676 A2 divulgue un exemple d'élément de renfort en forme de colonne connectant des parois supérieure et inférieure d'un réservoir à carburant. Le document WO2012/139962 A1 divulgue quant à lui un pilier circulaire en forme de sablier résistant très bien aux contraintes axiales dues aux phénomènes de traction/compression ainsi qu'aux tests de vieillissement et de résistance. Toutefois, un tel pilier est relativement sensible aux contraintes provoquées par des phénomènes de flexion et/ou de torsion.

L'invention a notamment pour objectif de pallier ces inconvénients de l'art antérieur. Plus précisément, un objectif de l'invention est de fournir un élément de renfort interne pour réservoir en matière plastique pour véhicule automobile pouvant résister non seulement aux contraintes axiales dues aux phénomènes de traction/compression mais aussi aux phénomènes de flexion et de torsion, ledit élément de renfort interne étant par ailleurs facilement obtenu par injection.

A cet effet, l'invention a pour objet un élément de renfort interne pour réservoir en matière plastique pour véhicule automobile selon la revendication 1.

La forme courbée de la portion centrale et sa structure nervurée permettent de mieux répartir les contraintes transmises à l'élément de renfort interne dans des directions différentes ainsi que des analyses par éléments finis réalisées par les inventeurs ont pu le mettre en évidence. On comprend qu'un tel élément de renfort interne résiste mieux aux phénomènes de flexion et de torsion que le pilier de l'art antérieur caractérisé par sa structure qu'on peut qualifier d'unidirectionnelle.

De plus, la forme courbée de l'élément de renfort interne lui permet de mieux s'affranchir des contraintes liées à son positionnement dans le réservoir. Par exemple, la partie concave de l'élément de renfort interne peut servir à entourer un accessoire prévu dans le réservoir, de sorte que le volume de cette partie concave n'est pas entièrement perdu. Le pilier de l'art antérieur ne permet pas de réaliser ce type d'agencement.

Par ailleurs, des essais de simulation ont permis de déterminer que si les surfaces d'extrémité ne sont pas oblongues, c'est-à-dire si elles présentent des angles saillants, alors on observe une concentration de contrainte au niveau de ces angles, formant ainsi une zone de fragilité de l'élément de renfort interne. Les inventeurs ont constaté qu'en remplaçant ces angles saillants par des bords arrondis, formant ainsi la forme oblongue, on observe une meilleure répartition des contraintes sur l'ensemble de l'élément de renfort interne, sans que les contraintes ne soient concentrées sur ces bords arrondis. De tels essais de simulation ont également permis d'observer des résultats similaires grâce au rétrécissement de section dans la transition de la portion centrale vers les portions d'extrémité axiale.

Avantageusement, l'élément de renfort interne est réalisé intégralement en polyéthylène haute densité (PEHD) ou en polyéthylène haute densité renforcé avec des fibres de verre.

L'élément de renfort interne est ainsi réalisé dans un matériau peu onéreux et facile à injecter et à souder. Le polyéthylène haute densité peut être renforcé avec des fibres de verre, par exemple jusqu'à 10% en poids, afin d'améliorer davantage les propriétés mécaniques de l'élément de renfort interne.

Avantageusement, les surfaces d'extrémité comprennent chacune un réseau de protubérances axiales.

Les protubérances axiales permettent de faciliter la soudure de l'élément de renfort interne aux parois du réservoir. Elles rendent notamment possible une soudure sans préchauffage.

De préférence, les surfaces d'extrémité comprennent chacune un ensemble ajouré de nervures axiales entourant le réseau de protubérances axiales.

Les nervures axiales, qui sont également destinées à être soudées aux parois du réservoir, améliorent la tenue de la soudure de l'élément de renfort interne aux parois du réservoir en permettant une évacuation de l'air pendant la soudure. En d'autres termes, les nervures axiales empêchent l'air d'être piégé entre les surfaces d'extrémité axiale et les parois du réservoir, ce qui fragiliserait la connexion entre l'élément de renfort interne et le réservoir.

Avantageusement, le réseau de nervures radiales comprend des nervures droites s'étendant perpendiculairement ou parallèlement à l'axe principal, définissant entre celles-ci des logements de forme générale de parallélépipède rectangle, et des nervures cylindriques, définissant entre celles-ci des logements de forme générale cylindrique.

Le réseau de nervures radiales forme ainsi un réseau de trous borgnes dans la portion centrale de l'élément de renfort interne, donnant ainsi une forme générale de gaufre à la portion centrale. Un tel réseau permet d'améliorer la rigidité de l'élément de renfort interne. En outre, le réseau de nervures radiales confère à l'élément de renfort interne un effet anti-bruit, de manière similaire aux propriétés acoustiques des boîtes à œufs.

Avantageusement, les nervures radiales forment un réseau asymétrique.

On confère ainsi au réseau de nervures radiales une fonction détrompage, également désignée par les termes japonais « poka yoke », signifiant respectivement « erreur non intentionnelle » et « prévenir », permettant d'imposer la position et l'orientation de l'élément de renfort interne dans le réservoir et donc de réduire le taux de rebut dans la fabrication des réservoirs en matière plastique pour véhicule automobile en empêchant des erreurs de montage de l'élément de renfort interne dans le réservoir.

Avantageusement, l'élément de renfort interne comprend des moyens de préhension situés sur une paroi latérale de la portion centrale.

On dote ainsi l'élément de renfort interne de moyens permettant de l'adapter à différentes techniques de moulage, ce qui contribue à rendre l'invention simple à mettre en œuvre.

Avantageusement, les surfaces d'extrémité ont une forme correspondant à une homothétie du secteur de couronne de rapport k inférieur ou égal à 1, forme à laquelle on remplace chacun de ses quatre angles par un bord arrondi. En d'autres termes, les surfaces d'extrémité ont une forme de secteur de couronne, s'étendant sur un secteur angulaire et un rayon correspondant respectivement au secteur angulaire et au rayon du secteur de couronne de la portion centrale multiplié par le rapport k inférieur à 1, dont les quatre angles sont remplacés par des bords arrondis.

Les surfaces d'extrémité, en plus d'être simples à réaliser, présentent ainsi une forme proche de celle de la section droite de la portion centrale. On s'assure ainsi que la transition géométrique entre la portion centrale et les portions d'extrémité ne présentent pas de forme qui concentrerait les contraintes pouvant fragiliser l'élément de renfort interne.

Selon un mode de réalisation particulier de l'invention, la forme de secteur de couronne de la section droite de la portion centrale présente un rayon infini, et la forme oblongue et incurvée de la surface d'extrémité de chacune des portions d'extrémité axiale présente également un rayon infini. En d'autres termes, l'élément de renfort a une forme linéaire plutôt que courbée.

Bien qu'un élément de renfort de forme linéaire n'offre pas autant d'avantages qu'un élément de renfort de forme courbée, un élément de renfort de forme linéaire bénéficie toutefois des avantages précités liés à la forme oblongue et au rétrécissement de section dans la transition de la portion centrale vers les portions d'extrémité axiale.

On prévoit également selon l'invention un réservoir en matière plastique pour véhicule automobile comprenant un élément de renfort interne tel que défini dans ce qui précède.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un élément de renfort interne pour réservoir en matière plastique selon un mode de réalisation de l'invention,
[Fig. 2] la figure 2 est une vue de face de l'élément de renfort interne de la figure 1,
[Fig. 3] la figure 3 est une vue en coupe transversale de l'élément de renfort interne de la figure 1,
[Fig. 4] la figure 4 est une vue de dessus de l'élément de renfort interne de la figure 1, et
[Fig. 5] la figure 5 est une vue schématique d'un réservoir en matière plastique pour véhicule automobile, selon l'invention, comprenant l'élément de renfort interne de la figure 1.

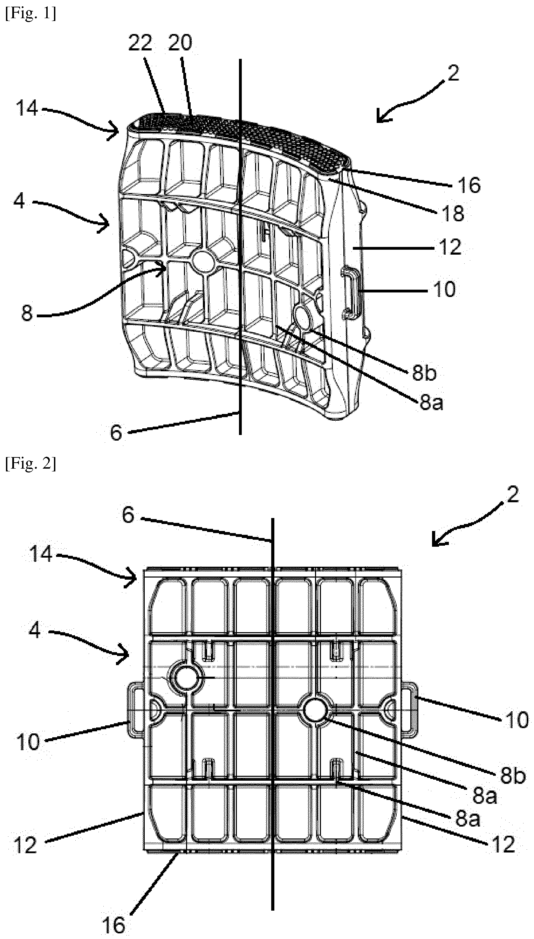

On a représenté en figure 1 un élément de renfort interne 2 pour réservoir en matière plastique pour véhicule automobile selon un mode de réalisation de l'invention. L'élément de renfort interne 2 est réalisé d'un seul tenant et intégralement réalisé dans un matériau convenant pour une soudure avec des parois d'un réservoir en matière plastique. L'élément de renfort 2 est ici intégralement réalisé en polyéthylène haute densité (HDPE) ou en polyéthylène haute densité renforcé avec des fibres de verre.

L'élément de renfort 2 comprend une portion centrale 4 présentant une section droite en forme de secteur de couronne par rapport à un axe principal 6 définissant une direction ou orientation axiale de l'élément de renfort 2. L'axe principal 6 est défini comme étant l'axe passant par le centre de rotation du secteur de couronne, perpendiculairement au secteur de couronne. Il s'agit de l'axe de rotation du secteur de couronne. L'axe principal 6 s'étend donc en dehors du secteur de couronne et de l'élément de renfort interne 2. Pour des raisons de clarté des figures, l'axe principal 6 est représenté par l'intermédiaire d'axes s'étendant dans l'élément de renfort interne 2 ou à sa surface, dans la mesure où la propriété principale de l'axe principal 6 selon l'invention est sa direction et non sa position. En d'autres termes, les axes portant la référence numérique « 6 » sur les figures correspondent à des axes parallèles à l'axe principal et permettent de repérer la direction axiale. Comme cela est mieux représenté sur la vue de face de l'élément de renfort interne 2 faisant l'objet de la figure 2, la portion centrale 4 comprend un réseau de nervures s'étendant radialement par rapport à l'axe principal 6, dit réseau de nervures radiales 8.

Le réseau de nervures radiales 8 comprend des nervures droites 8a qui s'étendent perpendiculairement ou parallèlement à l'axe principal 6 et qui définissent entre elles des logements, ou trous borgnes, de forme générale de parallélépipède rectangle. Le réseau de nervures radiales 8 comprend également des nervures cylindriques 8b qui définissent entre elles des logements, ou trous borgnes, de forme générale cylindrique. Les nervures droites 8a contribuent aux propriétés mécaniques de l'élément de renfort interne 2, notamment en améliorant sa résistance à la flexion et à la torsion. Les nervures radiales 8b participent également à renforcer les propriétés mécaniques de l'élément de renfort interne 2, mais ce n'est pas leur seule fonction. Les nervures radiales 8b forment un réseau asymétrique permettant de réaliser un détrompage. En d'autres termes, la position des nervures radiales 8b permet à un opérateur de positionner et d'orienter correctement l'élément de renfort interne 2 en vue de son installation dans un réservoir, afin qu'il ne soit pas monté à l'envers, auquel cas il pourrait ne pas assurer ses fonctions de renfort de manière optimale. Ici sur la figure 2, on observe que la portion centrale 4 de l'élément de renfort interne 2 comprend une nervure radiale 8b positionnée sur l'équateur de la portion centrale 4 et une autre nervure radiale 8b positionnée à distance de l'équateur. Cette deuxième nervure radiale permet à l'opérateur d'orienter correctement l'élément de renfort interne 2 dans un réservoir.

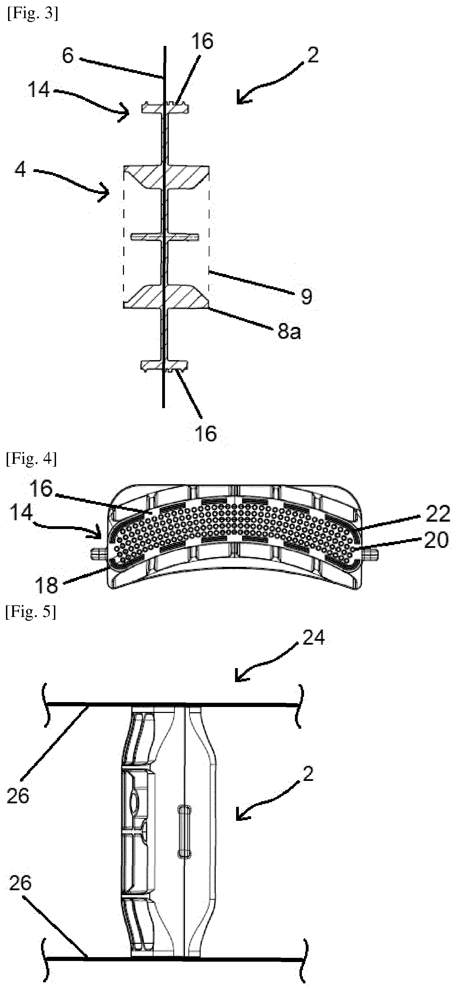

On a représenté en figure 3 une vue en coupe transversale de l'élément de renfort interne 2 qui permet d'observer la forme en secteur de couronne de la portion centrale 4. Pour ce faire, on remplit, fictivement, les trous borgnes définis par le réseau de nervures radiales 8 pour obtenir une surface pleine, comme selon les traits discontinus 9 représentés sur la figure 3. La section droite de la portion centrale 4, considérée dans un plan perpendiculaire à l'axe principal 6, présente une première aire a₁.

De retour à la figure 2, l'élément de renfort interne 2 comprend des moyens de préhension 10 situés sur une paroi latérale 12 de la portion centrale 4. Dans ce mode de réalisation de l'invention, la portion centrale 4 de l'élément de renfort 2 comprend deux parois latérales 12 opposées comprenant chacun les moyens de préhension 10. Chacun de ces moyens de préhension 10 se présente sous la forme d'une poignée droite connectée en deux points de la paroi latérale 12 correspondante. On peut comparer la forme de ces moyens de préhension 10 à celle d'une poignée de mallette. Les moyens de préhension 10 permettent de faciliter l'intégration de l'élément de renfort interne 2 lors la fabrication du réservoir en matière plastique, notamment lorsque celui-ci est réalisé par moulage par soufflage mettant en oeuvre une technique d'insertion de l'élément de renfort interne dans la paraison..

L'élément de renfort interne 2 comprend deux portions d'extrémité axiale 14 situées de part et d'autre de la portion centrale 4 en considérant l'axe principal 6. Comme cela est mieux représenté sur la figure 4 qui est une vue de dessus de l'élément de renfort interne 2, chacune des portions d'extrémité axiale 14 présente une surface d'extrémité 16 de forme oblongue et incurvée, inscrite dans la section droite de la portion centrale 4, ayant une seconde aire a₂ inférieure à la première aire a₁. Ici, Les surfaces d'extrémité 16 ont une forme correspondant à une homothétie du secteur de couronne de la portion centrale de rapport k inférieur ou égal à 1, forme à laquelle on remplace chacun de ses quatre angles par un bord arrondi 18. De préférence, le rapport k est choisi supérieur à 0,5, ou supérieur à 0,8, voire supérieur à 0,9. Selon une définition équivalente, les surfaces d'extrémité 16 ont une forme de secteur de couronne, s'étendant sur un secteur angulaire et un rayon correspondant respectivement au secteur angulaire et au rayon du secteur de couronne de la portion centrale multiplié par le rapport k inférieur à 1, dont les quatre angles sont remplacés par des bords arrondis 18. Les surfaces d'extrémités 16 sont destinées à être soudées à deux parois opposées d'un réservoir en matière plastique.

Chaque surface d'extrémité 16 comprend un réseau de protubérances axiales 20 s'étendant parallèlement à l'axe principal 6 sur une longueur comprise entre 1 et 2 mm. Les protubérances axiales 20 sont ici arrangées selon des rangées radiales et occupent une majorité de l'aire de la surface d'extrémité 16. Chaque surface d'extrémité 16 comprend en outre un ensemble ajouré de nervures axiales 22 entourant le réseau de protubérances axiales 20. Cela signifie que les nervures axiales 22 définissent un contour dans lequel sont inscrites toutes les protubérances axiales 20. Les nervures axiales 22 sont ajourées, autrement dit espacées entre elles, de manière à permettre une évacuation de l'air lors de la soudure des surfaces d'extrémité 16 aux parois d'un réservoir.

L'élément de renfort 2 est fabriqué par un procédé du type moulage par injection. Grâce à sa géométrie, et notamment celle du réseau de nervures radiales 8, le moulage peut être réalisé simplement en une opération.

On a représenté en figure 5 un réservoir en matière plastique 24 selon l'invention. Le réservoir 24 comprend l'élément de renfort interne 2, lequel est soudé à deux parois opposées 26 du réservoir 24. La soudure de l'élément de renfort interne 2 aux parois du réservoir 26 peut être réalisée par toute technique convenable, pendant ou après le moulage du réservoir 24. Les moyens de préhension 10 peuvent être saisis par un organe de maintien (non représenté) afin de faciliter la soudure de l'élément de renfort 2 aux parois du réservoir 26.

L'invention n'est pas limitée aux modes de réalisation présentés et d'autres modes de réalisation apparaîtront clairement à l'homme du métier.

### Liste de références

2 : élément de renfort interne
4 : portion centrale
6 : axe principal
8 : réseau de nervures radiales
8a : nervure droite
8b : nervure cylindrique
9 : trait discontinu
10 moyens de préhension
12 : paroi latérale
14 : portion d'extrémité axiale
16 : surface d'extrémité
18 : bord arrondi
20 : réseau de protubérances axiales
22 : nervure axiale
24 : réservoir
26 : paroi du réservoir

## Revendications

1. Elément de renfort interne (2) pour réservoir en matière plastique pour véhicule automobile, réalisé d'un seul tenant et comprenant :
- une portion centrale (4) présentant une section droite en forme de secteur de couronne, définissant un axe principal (6) de l'élément de renfort (2) et ayant une première aire, l'axe principal (6) passant par le centre de rotation du secteur de couronne perpendiculairement au secteur de couronne, la portion centrale (4) comprenant un réseau de nervures s'étendant radialement par rapport à l'axe principal, dit réseau de nervures radiales (8), et
- deux portions d'extrémité axiale (14) situées de part et d'autre de la portion centrale (4) en considérant l'axe principal (6), chacune des portions d'extrémité axiale (14) présentant une surface d'extrémité (16) de forme oblongue et incurvée,
**caractérisé en ce que** la surface d'extrémité (16) de chacune des portions d'extrémité axiale (14) est inscrite dans la section droite de la portion centrale (4), et a une seconde aire inférieure à la première aire.

2. Elément de renfort (2) selon la revendication précédente, réalisé intégralement en polyéthylène haute densité (PEHD) ou en polyéthylène haute densité renforcé avec des fibres de verre.

3. Elément de renfort (2) selon l'une quelconque des revendications précédentes, dans lequel les surfaces d'extrémité (16) comprennent chacune un réseau de protubérances axiales (20).

4. Elément de renfort (2) selon la revendication précédente, dans lequel les surfaces d'extrémité (16) comprennent chacune un ensemble ajouré de nervures axiales (22) entourant le réseau de protubérances axiales (20).

5. Elément de renfort (2) selon l'une quelconque des revendications précédentes, dans lequel le réseau de nervures radiales (8) comprend des nervures droites (8a) s'étendant perpendiculairement ou parallèlement à l'axe principal (6), définissant entre celles-ci des logements de forme générale de parallélépipède rectangle, et des nervures cylindriques (8b), définissant entre celles-ci des logements de forme générale cylindrique.

6. Elément de renfort (2) selon l'une quelconque des revendications précédentes, dans lequel les nervures radiales (8) forment un réseau asymétrique.

7. Elément de renfort (2) selon l'une quelconque des revendications précédentes, comprenant des moyens de préhension (10) situés sur une paroi latérale (12) de la portion centrale (4).

8. Elément de renfort (2) selon l'une quelconque des revendications précédentes, dans lequel les surfaces d'extrémité (16) ont une forme correspondant à une homothétie du secteur de couronne de rapport k inférieur ou égal à 1, forme à laquelle on remplace chacun de ses quatre angles par un bord arrondi.

9. Réservoir en matière plastique pour véhicule automobile (24) comprenant un élément de renfort interne (2) selon l'une quelconque des revendications précédentes.

## Patentansprüche

1. Inneres Verstärkungselement (2) für Tank aus Kunststoff für Kraftfahrzeug, einstückig gebildet und umfassend:
- einen mittleren Abschnitt (4), der einen Querschnitt in Form eines Ringsektors aufweist, eine Hauptachse (6) des Verstärkungselements (2) definiert und eine erste Grundfläche aufweist, wobei die Hauptachse (6) durch den Drehmittelpunkt des Ringsektors senkrecht zu dem Ringsektor verläuft, wobei der mittlere Abschnitt (4) ein Netz aus Rippen umfasst, die sich radial zu der Hauptachse erstrecken, so genanntes Radialrippennetz (8), und
- zwei Axialendabschnitte (14), die sich, bei Betrachtung der Hauptachse (6), auf beiden Seiten des mittleren Abschnitts (4) befinden, wobei jeder der Axialendabschnitte (14) eine Endfläche (16) länglicher und gekrümmter Form aufweist,
**dadurch gekennzeichnet, dass** die Endfläche (16) jedes der Axialendabschnitte (14) im Querschnitt des mittleren Abschnitts (4) liegt und eine zweite Grundfläche hat, die kleiner ist als die erste Grundfläche.

2. Verstärkungselement (2) nach dem vorhergehenden Anspruch, vollständig gebildet aus Polyethylen hoher Dichte (PEHD) oder aus glasfaserverstärktem Polyethylen hoher Dichte.

3. Verstärkungselement (2) nach einem der vorhergehenden Ansprüche, wobei die Endflächen (16) jeweils ein Netz aus axialen Ausstülpungen (20) umfassen.

4. Verstärkungselement (2) nach dem vorhergehenden Anspruch, wobei die Endflächen (16) jeweils eine mit Löchern versehene Anordnung aus axialen Rippen (22) umfassen, die das Netz aus axialen Ausstülpungen (20) umgeben.

5. Verstärkungselement (2) nach einem der vorhergehenden Ansprüche, wobei das Netz aus axialen Ausstülpungen (20) geradlinige Rippen (8a) umfasst, die sich senkrecht oder parallel zu der Hauptachse (6) erstrecken und zwischen einander Aufnahmen allgemein rechtwinkliger Quaderform definieren, und zylindrische Rippen (8b) umfasst, die zwischen einander Aufnahmen allgemein zylindrischer Form definieren.

6. Verstärkungselement (2) nach einem der vorhergehenden Ansprüche, wobei die radialen Rippen (8) ein asymmetrisches Netz bilden.

7. Verstärkungselement (2) nach einem der vorhergehenden Ansprüche, umfassend Greifmittel (10), die sich an einer seitlichen Wand (12) des mittleren Abschnitts (4) befinden.

8. Verstärkungselement (2) nach einem der vorhergehenden Ansprüche, wobei die Endflächen (16) eine Form haben, die einer zentrischen Streckung des Ringsektors im Verhältnis k kleiner oder gleich 1 entsprechen, wobei jede der vier Ecken der Form durch einen abrundeten Rand ersetzt wird.

9. Tank aus Kunststoff für Kraftfahrzeug (24), umfassend ein inneres Verstärkungselement (2) nach einem der vorhergehenden Ansprüche.

## Claims

1. An internal reinforcement element (2) for a plastic fuel tank for a motor vehicle, formed in one piece and comprising:
- a central portion (4) having a cross-section in the shape of an annulus sector, defining a main axis (6) of the reinforcement element (2) and having a first area, the main axis (6) passing through the center of rotation of the annulus sector perpendicular to the annulus sector, the central portion (4) comprising a network of ribs extending radially with respect to the main axis, referred to as a network of radial ribs (8), and
- two axial end portions (14) located on both sides of the central portion (4) with respect to the main axis (6), each of the axial end portions (14) having an end surface (16) of oblong and curved shape,
**characterized in that** the end surface (16) of each of the axial end portions (14) is inscribed within the cross-section of the central portion (4), and has a second area smaller than the first area.

2. The reinforcement element (2) according to the preceding claim, made entirely of high-density polyethylene (HDPE) or glass-fiber-reinforced high-density polyethylene.

3. The reinforcement element (2) according to any one of the preceding claims, wherein the end surfaces (16) each comprise a network of axial protrusions (20).

4. The reinforcement element (2) according to the preceding claim, wherein the end surfaces (16) each comprise an openwork set of axial ribs (22) surrounding the network of axial protrusions (20).

5. The reinforcement element (2) according to any one of the preceding claims, wherein the network of radial ribs (8) comprises straight ribs (8a) extending perpendicular or parallel to the main axis (6), defining between them recesses having a generally rectangular parallelepiped shape, and cylindrical ribs (8b), defining between them recesses having a generally cylindrical shape.

6. The reinforcement element (2) according to any one of the preceding claims, wherein the radial ribs (8) form an asymmetric network.

7. The reinforcement element (2) according to any one of the preceding claims, comprising gripping means (10) located on a side wall (12) of the central portion (4).

8. The reinforcement element (2) according to any one of the preceding claims, wherein the end surfaces (16) have a shape corresponding to a homothety of the annulus sector with a ratio k less than or equal to 1, a shape in which each of its four corners is replaced by a rounded edge.

9. A plastic tank for a motor vehicle (24) comprising an internal reinforcement element (2) according to any one of the preceding claims.
